(19)

Europäisches
Patentamt
European
Patent Office
Office européen
des brevets

(11) **EP 4 769 522 A1**

(12) **EUROPEAN PATENT APPLICATION**

(43) Date of publication:
01.07.2026 Bulletin 2026/27

(21) Application number: 25227350.3

(22) Date of filing: **29.12.2025**

(51) International Patent Classification (IPC):
$H01M\ 4/131^{(2010.01)}$    $H01M\ 4/1315^{(2010.01)}$
$H01M\ 4/505^{(2010.01)}$    $H01M\ 4/525^{(2010.01)}$
$H01M\ 4/62^{(2006.01)}$    $H01M\ 10/0562^{(2010.01)}$

(52) Cooperative Patent Classification (CPC):
H01M 4/131; H01M 4/1315; H01M 4/505;
H01M 4/525; H01M 4/62; H01M 10/0562

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.12.2024 KR 20240199698**

(71) Applicant: **SAMSUNG SDI CO., LTD.**
**Yongin-si, Gyeonggi-do 17084 (KR)**

(72) Inventors:
• **OH, Daeyang**
**17084 Gyeonggi-do (KR)**
• **KIM, Jinhee**
**17084 Gyeonggi-do (KR)**
• **YOU, Hoseon**
**17084 Gyeonggi-do (KR)**
• **KANG, Dongwoo**
**17084 Gyeonggi-do (KR)**

(74) Representative: **Michalski Hüttermann & Partner mbB**
**Kaistraße 16A**
**40221 Düsseldorf (DE)**

(54) **POSITIVE ELECTRODE FOR ALL-SOLID-STATE BATTERY, ALL-SOLID-STATE BATTERY INCLUDING THE SAME, AND METHOD FOR MANUFACTURING A POSITIVE ELECTRODE FOR ALL-SOLID-STATE BATTERY**

(57) The present disclosure relates to a positive electrode for an all-solid-state battery, an all-solid state battery including the positive electrode, and a method for manufacturing the positive electrode for an all-solid state battery. The positive electrode includes a positive electrode current collector and a positive electrode active material layer on the positive electrode current collector, wherein the positive electrode active material layer includes a positive electrode active material, a sulfide-based solid electrolyte, a binder, and an additive. The additive includes metal-acetylacetonate.

FIG. 1

EP 4 769 522 A1

**Description**

CROSS-REFERENCE TO RELATED APPLICATION

This U.S. nonprovisional application claims priority under 35 U.S.C § 119 to Korean Patent Application No. 10-2024-0199698 filed on December 30, 2024 in the Korean Intellectual Property Office, the disclosure of which is hereby incorporated by reference in its entirety.

BACKGROUND

The present disclosure relates to a positive electrode for an all-solid-state battery, an all-solid state battery including the positive electrode, and a method for manufacturing the positive electrode for an all-solid state battery.

There has recently been active development of high-energy density and safe batteries driven by industrial demands. For example, lithium ion batteries are being commercialized not only in the information-related and communication devices industry, but also in the automotive industry. In the automotive industry, safety is relevant due to its direct relation to human safety.

There has recently been suggested an all-solid-state battery that uses a solid electrolyte in place of a liquid electrolyte. As an all-solid-state battery does not use a flammable organic dispersion medium, the possibility of fire or explosion may be significantly reduced even in the event of short-circuit. Accordingly, an all-solid-state battery may significantly increase safety compared to a lithium ion battery using a liquid electrolyte.

SUMMARY

An example embodiment of the present disclosure includes a positive electrode for an all-solid-state battery having desired or improved electrical characteristics and improved atmospheric stability, and an all-solid state battery including the positive electrode.

An example embodiment of the present disclosure includes a method for manufacturing a positive electrode for an all-solid-state battery having desired or improved electrical characteristics and improved atmospheric stability.

According to an example embodiment of the present disclosure, a positive electrode for an all-solid-state battery may include a positive electrode current collector and a positive electrode active material layer on the positive electrode current collector, wherein the positive electrode active material layer may include a positive electrode active material, a sulfide-based solid electrolyte, a binder, and an additive, and the additive may include metal-acetylacetonate.

According to an example embodiment of the present disclosure, an all-solid-state battery may include a positive electrode, a negative electrode, and a solid electrolyte layer between the positive electrode and the negative electrode.

According to an example embodiment of the present disclosure, a method for manufacturing a positive electrode for an all-solid-state battery may include preparing a positive electrode current collector, forming a positive electrode active material slurry by mixing a positive electrode active material, a sulfide-based solid electrolyte, a binder, an additive, and a solvent, and coating the positive electrode active material slurry on the positive electrode current collector, wherein the additive may include metal-acetylacetonate.

BRIEF DESCRIPTION OF DRAWINGS

FIG. 1 illustrates a top view showing an all-solid-state battery according to example embodiments of the present disclosure.

FIG. 2A illustrates a cross-sectional view taken along line A-A' in FIG. 1.

FIG. 2B illustrates a cross-sectional view taken along line B-B' in FIG. 1.

FIG. 3 illustrates an enlarged cross-sectional view showing section "M" in FIG. 2A for describing the positive electrode active material layer 120 according to an example embodiment of the present disclosure.

FIG. 4 illustrates an enlarged cross-sectional view showing section "M" in FIG. 2A for describing the positive electrode active material layer 120 according to a comparative example of the present disclosure.

FIG. 5 illustrates a schematic diagram showing a distribution form of a solid electrolyte SSE and a binder BND in the positive electrode active material layer 120 according to a comparative example of the present disclosure.

FIG. 6 illustrates a schematic diagram showing a distribution form of a solid electrolyte SSE and a binder BND in the positive electrode active material layer 120 according to an example embodiment of the present disclosure.

FIG. 7 illustrates a cross-sectional view taken along line A-A' in FIG. 1 for describing an all-solid-state battery according to another example embodiment of the present disclosure.

FIG. 8 illustrates a graph showing the measurement result of the shear viscosity of the positive electrode active material slurry of Embodiment 1 of the present disclosure.

FIG. 9 illustrates a graph showing the measurement result of the shear viscosity of the positive electrode active material slurry of Embodiment 2 of the present disclosure.

FIG. 10 illustrates a graph showing the measurement result of the shear viscosity of the positive electrode active material slurry of Embodiment 3 of the present disclosure.

FIG. 11 illustrates a graph showing the measurement result of the shear viscosity of the positive electrode active material slurry of the comparative example of the present disclosure.

FIGS. 12A to 12D illustrate graphs showing XPS analysis results for the positive electrode of Example 1 of the present disclosure.

FIGS. 13A to 13D illustrate graphs showing XPS analysis results for positive electrodes of Comparative Examples of the present disclosure.

FIG. 14 is a flowchart illustrating a method of manufacturing a positive electrode for an all-solid-state battery, according to an example embodiment.

DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be directly on the other element, or intervening elements may be present therebetween. In the drawings, thicknesses of some components may be exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions exemplarily illustrated in the drawings have general properties, and shapes of regions exemplarily illustrated in the drawings are used to exemplarily disclose specific shapes but not limited to the scope of the present disclosure. It is understood that, although the terms "first", "second", "third," and the like, may be used herein to describe various elements, these elements should not be limited by these terms. These terms are only used to distinguish one element from another element. The example embodiments explained and illustrated herein include complementary embodiments thereof.

The terms in this description are merely used to describe various embodiments, but are not intended to limit the present disclosure. Unless otherwise specially noted in this description, the expression of singular form may include the expression of plural form. The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

In this description, each of phrases as "A or B," "at least one of A and B," "at least one of A or B," "A, B, or C," "at least one of A, B, and C," and "at least one of A, B, or C," may include any one of, or all possible combinations of, the items enumerated together in a corresponding one of the phrases.

Unless otherwise especially defined in this description, a particle diameter may be an average particle diameter. In addition, a particle diameter indicates an average particle diameter ($D_{50}$) of particles having a cumulative volume of about 50 vol% in particle size distribution. The average particle diameter ($D_{50}$) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and an average particle diameter ($D_{50}$) value may then be obtained through a calculation. A laser scattering method may also be utilized to measure the average particle diameter ($D_{50}$). In the laser scattering method, a target particle is dispersed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

In this description, the average particle diameter may refer to a diameter measured by randomly or non-systematically selecting 100 or more particles from an electron microscope image. Alternatively, in this description, the average particle diameter may be measured using a particle size analyzer and may refer to a diameter of a particle having a cumulative volume of about 50 vol% in particle size distribution.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

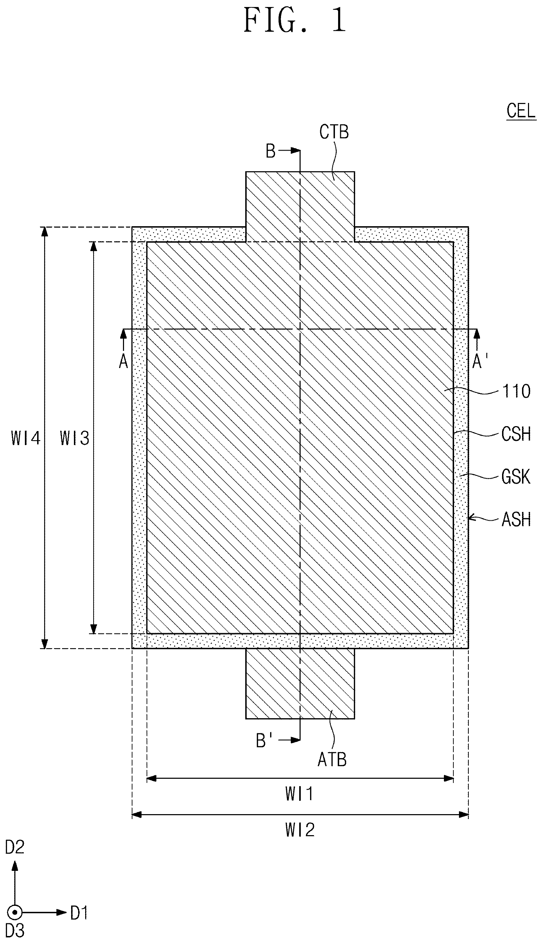

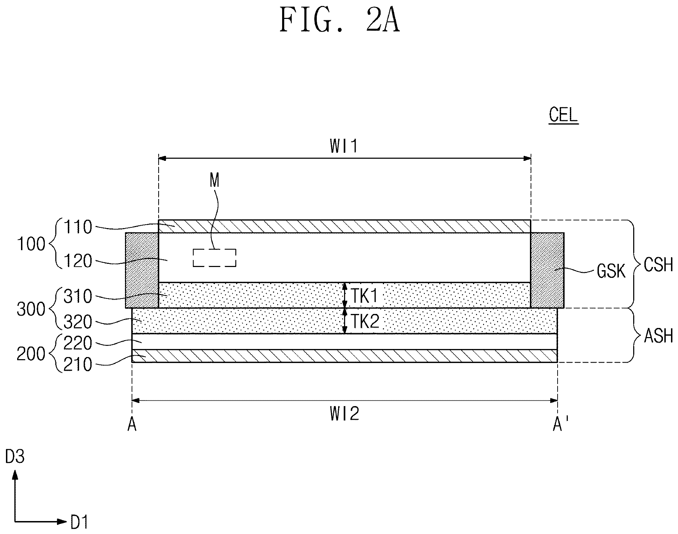

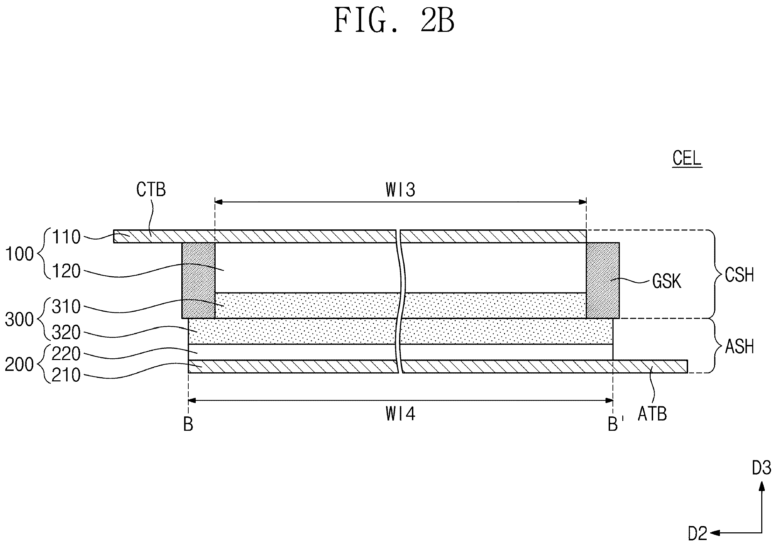

FIG. 1 illustrates a top view showing an all-solid-state battery according to example embodiments of the present disclosure. FIG. 2A illustrates a cross-sectional view taken along line A-A' in FIG. 1. FIG. 2B illustrates a cross-sectional view taken along line B-B' in FIG. 1.

Referring to FIGS. 1, 2A, and 2B, a unit cell CEL of an all-solid-state battery according to the present disclosure may include a positive electrode layer 100, a negative electrode layer 200 opposite to the positive electrode layer 100, and a solid electrolyte layer 300 disposed between the positive electrode layer 100 and the negative electrode layer 200. The present disclosure, however, is not limited thereto, and the unit cell CEL may further include an additional functional layer, such as an adhesion enhancement layer, disposed between the positive electrode layer 100 and the solid electrolyte layer 300, or between the negative electrode layer 200 and the solid electrolyte layer 300.

## Positive Electrode Layer 100

The positive electrode layer 100 according to an example embodiment of the present disclosure may include a positive electrode current collector 110 and a positive electrode active material layer 120 disposed on the positive electrode current collector 110.

The positive electrode current collector 110 may provide a reference surface on which the positive electrode active material layer 120 is disposed. The positive electrode current collector 110 may include a plate or foil including, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Differently from that shown in FIG. 1, in an example embodiment of the present disclosure, the positive electrode current collector 110 may not be provided. Although not shown, to increase adhesion between the positive electrode current collector 110 and the positive electrode active material layer 120, a carbon layer having a thickness in a range of $\geq$ 0.1 $\mu$m to $\leq$ 4 $\mu$m may further be disposed between the positive electrode current collector 110 and the positive electrode active material layer 120.

## Positive Electrode Active Material Layer 120

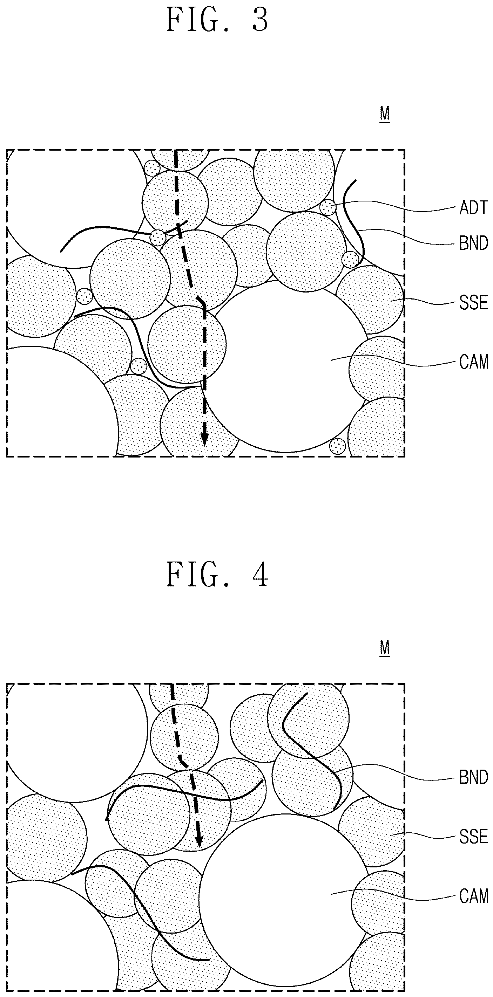

FIG. 3 illustrates an enlarged cross-sectional view showing section "M" of FIG. 2A for describing the positive electrode active material layer 120 according to example embodiments of the present disclosure.

Referring to FIG. 3, the positive electrode active material layer according to example embodiments of the present disclosure may include a positive electrode active material CAM, a sulfide-based solid electrolyte SSE, a binder BND, and an additive ADT.

The positive electrode active material CAM of the positive electrode active material layer 120 may include a material that can reversibly absorb and desorb lithium ions. The positive electrode active material CAM may include a plurality of particles. For example, the positive electrode active material CAM may include at least one of a lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material CAM may be used alone or in a mixture of two or more substances.

The lithium transition metal oxide may be or include, for example, a compound represented by one of $Li_aA_{1-b}B_bD_2$ (where $0.90 \leq a \leq 1$ and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $LiE_{2-b}B_bO_{4-c}D_c$ (where $0 \leq b \leq 0.5$ and $0 \leq c \leq 0.05$), $Li_aNi_{1-b-c}Co_bB_cD_\alpha$ (where $0.90 \leq a \leq 1$, $0 \leq b \leq 0.5$, $0 \leq c \leq 0.05$, and $0 < \alpha < 2$), $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0 < \alpha < 2$), $Li_aNi_{1-b-c}Mn_bB_cD_\alpha$ (where $0.90 \leq a \leq 1$, $0 \leq b \leq 0.5$, $0 \leq c \leq 0.05$, and $0 < \alpha \leq 2$), $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0 < \alpha < 2$), $Li_aNi_bE_cG_dO_2$ (where $0.90 \leq a \leq 1$, $0 \leq b \leq 0.9$, $0 \leq c \leq 0.5$, and $0.001 \leq d \leq 0.1$), $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (where $0.9 \leq a \leq 1$ and $0.001 \leq b \leq 0.1$), $Li_aCoG_bO_2$ (where $0.90 \leq a \leq 1$ and $0.001 \leq b \leq 0.1$), $Li_aMnG_bO_2$ (where $0.90 \leq a \leq 1$ and $0.001 \leq b \leq 0.1$), $Li_aMn_2G_bO_4$ (where $0.90 \leq a \leq 1$ and $0.001 \leq b \leq 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \leq f \leq 2$), $Li_{3-f}Fe_2(PO_4)_3$ (where $0 \leq f \leq 2$), and $LiFePO_4$. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material CAM may include, for example, a lithium salt of transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 (half) of a ridge of a unit lattice. The lithium transition metal oxide having the layered rock salt type structure may be or include a ternary lithium transition metal oxide, such as $LiNi_xCo_yAl_zO_2$ (NCA) or $LiNi_xCo_yMn_zO_2$ (NCM) (where 0<x<1,0<y<1, 0<z<1, and x+y+z=1). When the positive electrode active material CAM includes a ternary lithium transition metal oxide having the layered rock salt type structure, the unit cell CEL may have increased energy density and improved thermal stability.

The compound included in the positive electrode active material CAM may be covered with a coating layer (not shown). The positive electrode active material may be used in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound that constitutes the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, $Li_2O$-$ZrO_2$ (LZO). A method for forming the coating layer may be determined among any methods that do not adversely affect physical characteristics of the positive electrode active material. The method of forming the coating layer may include, for example, spray coating or immersion.

When the positive electrode active material CAM includes nickel (Ni) as a ternary lithium transition metal oxide such as NCA or NCM, a capacity density of the unit cell CEL may increase to reduce metal elution from the positive electrode active material in a charged state. Therefore, the unit cell CEL may improve cycle characteristics in a charged state. The language "cycle characteristics" may refer to properties that indicate the degree to which the unit cell CEL is degraded due to charge and discharge. For example, the unit cell CEL with high cycle characteristics may degrade less due to charge and discharge, while the unit cell CEL with low cycle characteristics may degrade more due to charge and discharge.

The positive electrode active material CAM may have, for example, a spherical or oval particle shape. There is no limitation on a particle diameter and an amount of the positive electrode active material.

The solid electrolyte SSE of the positive electrode active material layer 120 may have a particle shape. The solid electrolyte SSE may be dispersed between the positive electrode active materials CAM. The solid electrolyte SSE may include a sulfide-based solid electrolyte with desired or improved lithium ionic conductivity. The sulfide-based solid electrolyte may include, for example, at least one of $Li_2S$-$P_2S_5$, $Li_2S$-$P_2S_5$-LiX (where X is or includes a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_m$S, (where m and n are each a positive integer, and "Z" is or includes one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, and "M" is or includes one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may include an argyrodite-type compound including at least one of $Li_6P_5sCl$, $Li_6PS_5Br$, and $Li_6PS_5I$.

Alternatively, the sulfide-based solid electrolyte may include an argyrodite-type including $Li_{7-a}M_aPS_{6-c}X_c$ (where $0 \leq a \leq 2$ and $0 \leq c \leq 2$). In the chemical formula above, X may be or include at least one of F, Br, Cl, or a combination thereof. M may include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof. The sulfide-based solid electrolyte may include, for example, at least one of $Li_{7-x}PS_{6-x}Cl_x$ (where $0 \leq x \leq 2$), $Li_{7-x}PS_{6-x}Br_x$ (where $0 \leq x \leq 2$), $Li_{7-x}PS_{6-x}I_x$ (where $0 \leq x \leq 2$), $Li_{7-y}M1_yPS_{6-z}M2_z$ (where $0 \leq y \leq 2$, and $0 \leq z \leq 2$), and a combination thereof, wherein M1 is or includes at least one element from Groups 3 to 15 of the Periodic Table, and wherein M2 is or includes at least one element from Group 17 of the Periodic Table.

The argyrodite-type solid electrolyte may have a density in a range of $\geq 1.5$ g/cc to $\leq 2.0$ g/cc. When the argyrodite-type solid electrolyte has a density that is equal to or greater than about 1.5 g/cc, it may be possible to decrease an internal resistance of an all-solid-state battery and to hinder or prevent a solid electrolyte layer from short-circuit and penetration caused by the formation of lithium dendrites. The solid electrolyte SSE may have an elastic modulus in a range of, for example, $\geq 15$ GPa to $\leq 35$ GPa.

The solid electrolyte SSE in the positive electrode active material layer 120 may have an average particle diameter that is less than the average particle diameters of first and second electrolytes in the solid electrolyte layer 300 which are discussed below. For example, the average particle diameter of the solid electrolyte SSE in the positive electrode active material layer 120 may be substantially equal to or less than about 90%, 80%, 70%, 60%, 50%, 40%, 30%, or 20% of the average particle diameter of a solid electrolyte included in the solid electrolyte layer 300. The average particle diameter may be a median diameter measured with a laser-type particle size distribution analyzer.

The binder BND in the positive electrode active material layer 120 may combine the positive electrode active material CAM and the solid electrolyte SSE in the positive electrode active material layer 120 together. The binder BND may include a material that is configured to improve adhesion between the positive electrode active material layer 120 and the positive electrode current collector 110. The binder BND may comprise at least one of a fluorine-based binder, a rubber-based binder, and a combination thereof.

For example, the binder BND may include at least one of polyvinylidenefluoride, styrene-butadiene rubber (SBR), polytetrafluoroethylene, polyvinylidenefluoride, vinylidenefluoride/hexafluoropropylene copolymer, polyacrylonitrile, and polymethylmethacrylate. In an example embodiment, the binder BND may include polyvinylidene fluoride.

The additive ADT in the positive electrode active material layer 120 may improve the dispersibility of the positive electrode active materials CAM, the solid electrolyte SSE, the binder BND, and the like, in the positive electrode activity material layer 120. Thus, the additive ADT may improve the electrical characteristics of the positive electrode.

The additive ADT may include, for example, metal-acetylacetonate. The central metal of the metal-acetylacetonate is not particularly limited as long as the central metal is a metal capable of forming a complex compound (or coordination compound) with an acetylacetonate ligand. For example, the central metal of the metal-acetylacetonate may include at least one of from aluminum (Al), manganese (Mn), boron (B), iron (Fe), copper (Cu), nickel (Ni), gallium (Ga), zirconium (Zr), tin (Sn), zinc (Zn), chromium (Cr), and a combination thereof. For example, the central metal may include at least one of Al (III), Cu (II), Mn (II), Mn(III), Fe (III), Zr (IV), Sn (II), Sn (IV), Cr (III), and the like. In an example embodiment, the central metal of the metal-acetylacetonate may be or include an aluminum cation ($Al^{3+}$).

When the central metal of the metal-acetylacetonate is a divalent cation, two acetylacetonates may participate in the coordination bond. Each acetyl acetonate ligand may form two coordination bonds via two oxygen atoms, and consequently the metal-acetylacetonate may have a square planar structure with four coordination sites.

When the central metal of the metal-acetylacetonate is a trivalent cation, three acetylacetonates may participate in the coordination bond. Each acetyl acetonate ligand may form two coordination bonds via two oxygen atoms, and consequently the metal-acetylacetonate may have an octahedral structure with six coordination sites.

When the central metal of the metal-acetylacetonate is a tetravalent cation, four acetylacetonates may participate in the coordination bond. Each acetyl acetonate ligand may form two coordination bonds via two oxygen atoms, and consequently the metal-acetylacetonate may have an octacoordinate bisphenoid geometry, a distorted square configuration, or the like.

The metal-acetylacetonate may be or include, for example, but not limited to, aluminum (III) acetylacetonate, copper (II) acetylacetoneate, manganese (II) acetylacetonate, and manganese (III) acetylacetoneate. The additive ADT may interact with the sulfide-based solid electrolyte SSE. For example, a force such as a Lewis acid-base interaction, an ion-ion interaction, or an ion-dipole interaction may act between the additive ADT and the sulfide-based solid electrolyte SSE.

For example, the metal ion of the metal acetylacetonate acts as a Lewis acid, and the sulfur ion ($S^{2-}$) of the sulfide-based solid electrolyte SSE acts as a Lewis base, so that there may be a Lewis acid-base interaction between the additive ADT and the sulfide-base solid electrolyte SSE. Alternatively, there may be an ion-ion interaction between the sulfur anion ($S^{2-}$) or lithium cation ($Li^+$) of the sulfide-based solid electrolyte SSE and the metal ion of the metal acetylacetonate. Alternatively, the metal ions and acetylacetone ligands of the metal acetylacetonate, both of which are polar, may interact through ion dipole interactions with the sulfur anions ($S^{2-}$) or lithium cations ($Li^+$) of the sulfide-based solid electrolyte SSE.

The additive ADT may interact with the binder BND. For example, a force such as a Lewis acid-base interaction, an ion-dipole interaction, or a van der Waals force may exist between the additive ADT and the binder BND.

For example, a metal ion of the metal acetylacetonate acts as a Lewis acid, and a functional group (for example, a carbonyl group (C=O), a hydroxy group (-OH), an epoxy group (-O-), or the like) included in the binder BND acts as a Lewis base, so that there may be a Lewis acid-base interaction between the additive ADT and the binder BND. Alternatively, van der Waals forces may exist between the acetylacetone ligand of the metal acetylacetonate and the non-polar part of the binder (e.g., the fluorocarbon chain of PVDF).

The additive ADT may interact with at least one of the sulfide-based solid electrolyte SSE and the binder BND to reduce or prevent aggregation of the solid electrolyte SSE with the binder BND. When the aggregation of the solid electrolyte SSE and the binder BND is reduced or suppressed, the phase stability of the positive electrode active material slurry may be improved, and the electrical characteristics of the positive electrode may be improved.

In the positive electrode active material slurry, the solid electrolyte SSE and the binder BND may be aggregated by electrostatic attraction, van der Waals force, interaction with a solvent, or the like. When the solid electrolyte SSE and the binder BND are aggregated, the solid electrolytes and the binders BND may not be uniformly dispersed in the solvent and may form a cluster. The aggregated clusters may reduce the area of contact with the solvent, thereby decreasing particle dispersibility within the slurry. The aggregated clusters may cause non-uniformity in the viscosity and rheological properties of the slurry, reduce its flowability, and ultimately deteriorate the phase stability of the slurry.

The additive ADT according to example embodiments of the present disclosure may interact with at least one of the sulfide-based solid electrolyte SSE and the binder BND, as described above. The additive ADT may be located on the surface of the sulfide-based solid electrolyte SSE to reduce or prevent aggregation of the binder BND and the solid electrolyte. Alternatively, the additive ADT may be positioned around the binder BND to reduce or prevent aggregation of the binder BND and the solid electrolyte SSE. In other words, the additive ADT according to the example embodiments of the present disclosure may interact with at least one of the sulfide-based solid electrolyte SSE and the binder BND to reduce or prevent aggregation of the binder BND and the solid electrolyte SSE. As a result, the additive ADT may improve the dispersibility and phase stability of the positive electrode active material slurry, thereby improving the electrical characteristics of the produced positive electrode.

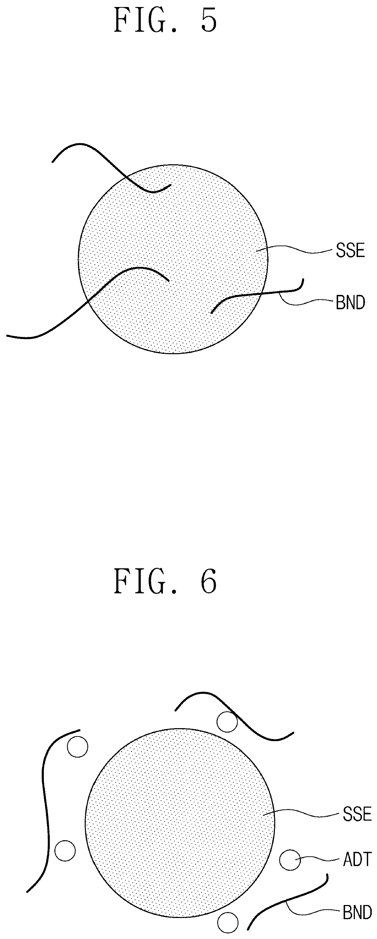

FIG. 4 illustrates a positive electrode active material layer 120 according to a comparative example of the present disclosure, and is an enlarged cross-sectional view showing section "M" in FIG. 2A. FIG. 5 illustrates a schematic diagram showing a distribution form of a solid electrolyte SSE and a binder BND in the positive electrode active material layer 120 according to a comparative example of the present disclosure.

Referring to FIGS. 4 and 5, in the positive electrode active material layer 120 according to the comparative example, the solid electrolyte SSE and the binder BND may exist in the form of aggregated clusters. When the solid electrolyte SSE and the binder BND are aggregated and a large amount of the binder BND, which is an electrical non-conductor, is distributed around the solid electrolyte SSE, contact between the solid electrolyte particles SSE or between the solid electrolyte SSE and the positive electrode active material CAM may be hindered. When the contact between the solid electrolyte particles SSE or between the solid electrolyte SSE and the positive electrode active material CAM is hindered, the movement path of lithium ions and the conduction path of electrons are blocked, and thus the ion conductivity and the electron conductivity of the positive electrode 100 may be deteriorated.

FIG. 6 illustrates a schematic diagram showing a distribution form of a solid electrolyte SSE and a binder BND in the positive electrode active material layer 120 according to an example embodiment of the present disclosure. Referring to FIGS. 3 and 6, in the positive electrode active material layer 120 according to an example embodiment, the solid electrolyte SSE and the binder BND may exist in an substantially evenly dispersed form without being aggregated.

When the distribution of the binder BND around the solid electrolyte (SSE) decreases, the contact area between the solid electrolyte SSE and the positive electrode active material CAM increases, and thus the lithium ion conductivity may be improved. In addition, factors that disturb the electron flow may be reduced, so that the electron conduction path may be improved and the electron conductivity may be improved.

The additive ADT may improve the atmospheric stability of the positive electrode active material slurry and the positive electrode active materials layer 120. The positive electrode active material slurry for an all-solid-state battery and the positive electrode active material layer 120 have a relatively low atmospheric stability because they include a sulfide-based solid electrolyte SSE having high reactivity with moisture ($H_2O$) and carbon dioxide ($CO_2$).

When the chemically stable metal acetylacetonate is located around the sulfide-based solid electrolyte SSE, contact between the sulfide-base solid electrolyte SSE and moisture in the air may be limited. Alternatively, the metal acetylacetonate may adsorb water molecules on the surface of the sulfide-based solid electrolyte SSE, or the ligand structure may inhibit the reaction with moisture, thereby alleviating the moisture reaction of the solid electrolyte SSE. As a result, the metal acetylacetonate may inhibit the sulfide-based solid electrolyte SSE from reacting with moisture in the atmosphere, thereby improving the atmospheric stability of the positive electrode active material slurry and the positive electrode active material layer 120.

The additive ADT may protect the sulfide-based solid electrolyte SSE from atmospheric moisture by Lewis acid-base interaction with the sulfide-based solid electrolyte SSE, but may have little effect on the chemical structure of the sulfide-based solid electrolyte SSE. In other words, the additive ADT may improve the atmospheric stability of the sulfide-based solid electrolyte SSE without deforming the sulfide-based solid electrolyte SSE.

The additive ADT in the prepared positive electrode may be identified through Fourier-Transform Infrared Spectroscopy (FT-IR), Time-of-Flight Secondary Ion Mass Spectrometry (TOF-SIMS) analysis, or Gas Chromatography-Mass Spectrometry (GC-MS).

In an example embodiment, the additive ADT may be detected by analyzing a sample collected from the positive electrode active material layer 120 by FT-IR to confirm a characteristic peak of an acetylacetonate ligand (for example, C=O elongation vibration in a region of 1600 to 1500 cm$^{-1}$). In another example embodiment, a time-of-flight secondary ion mass spectrometry (TOF-SIMS) analysis method may be used to separately detect metal ions and acetylacetonate ligands from the positive electrode surface to directly or indirectly confirm the presence of metal acetylacetonates.

The amount of the additive ADT in the positive electrode active material layer 120 may be in a range of $\geq 0.01$ parts by weight to $\leq 0.8$ parts by weight relative to 100 parts by weight of the positive electrode active materials layer 120. For example, the amount of the additive ADT may be $\geq 0.03$ parts by weight to $\leq 0.5$ parts by weight, or $\geq 0.05$ parts by weight to ≤ 0.3 parts by weight.

When the amount of the additive ADT in the positive electrode active material layer 120 is too small, e.g., less than 0.01 parts by weight, it may be challenging to improve the atmospheric stability of the positive electrode active materials layer 120. When the amount of the additive ADT in the positive electrode active material layer 120 is too large, e.g., more than about 0.8 parts by weight, the capacity of the positive electrode 100 may be reduced. When the amount of the additive ADT satisfies the above-described range, the positive electrode 100 may have a desired or improved capacity, and improved atmospheric stability.

The weight ratio of the binder BND to the additive ADT in the positive electrode active material layer 120 may be in a range of about 1:0.01 to about 1:0.5. For example, the weight ratio of the binder BND to the additive ADT may be about 1:0.02 to about 1:0.3 or about 1:0.03 to about 1:0.2. When the weight ratio of the binder BND to the additive ADT satisfies the above-described range, the positive electrode layer 100 may have desired electrical conductivity and ion conductivity.

The amount of the sulfide-based solid electrolyte SSE in the positive electrode active material layer 120 may be in a range of ≥ 5 parts by weight to ≤ 30 parts by weight relative to 100 parts by weight of the positive electrode active materials layer 120. For example, the amount of the sulfide-based solid electrolyte SSE may be ≥ 5 parts by weight to ≤ 25 parts by weight, or ≥ 10 parts by weight to ≤ 25 parts by weight.

The positive electrode active material layer 120 may further include a conductive material. The conductive material may have conductivity without causing an undesirable chemical change in the unit cell CEL, thereby increasing the conductivity of the positive electrode active material and the solid electrolyte. The conductive material may include a carbon-based material. The conductive material may include, for example, at least one of graphite, carbon black, acetylene black, carbon nanofibers, carbon nanotubes, and a combination thereof.

Based on 100 parts by weight of the solid electrolyte SSE, the positive electrode active material layer 120 may include about 1 part by weight or more and about 50 parts by weight or less of a conductive material. When the conductive material is included in the positive electrode active material layer 120 in an amount of less than about 1 part by weight based on 100 parts by weight of the solid electrolyte, the proportion of the conductive material is reduced, so that the electrical conductivity of the positive electrode active materials layer 120 may be lowered. When the conductive material is included in the positive electrode active material layer 120 in an amount of more than about 50 parts by weight based on 100 parts by weight of the solid electrolyte SSE, the proportion of the conductive material is excessively high, and a coating layer covering the surface of the solid electrolyte SSE may not be properly formed.

The positive electrode active material layer 120 may further include additives such as a filler, a coating agent, a dispersant, and an ion conductive auxiliary agent in addition to the positive electrode active material CAM, the solid electrolyte SSE, the binder BND, the additive ADT, and the conductive material described above.

**Method for Manufacturing Positive Electrode**

A method for manufacturing a positive electrode according to example embodiments of the present disclosure may include preparing a positive electrode current collector; forming a positive electrode active material slurry by mixing a positive electrode active material, a sulfide-based solid electrolyte, a binder, an additive, and a solvent, and coating the positive electrode active material slurry on the positive electrode current collector.

As the positive electrode current collector, as described above, a plate or foil including at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be prepared.

The positive electrode active material, the sulfide-based solid electrolyte, the binder, and the additive may be mixed in a solvent to form a positive electrode active material slurry. The solvent may be or include a nonpolar organic solvent or an organic solvent having weak polarity, which has low reactivity with the sulfide-based solid electrolyte. For example, the solvent may include at least one of xylene, benzene, toluene, pentane, hexane, cyclohexane, octyl acetate, and a combination thereof. In one example embodiment, the solvent may include octyl acetate.

In the mixing method, any method that may be used by those skilled in the art is possible, and the method is not limited to a specific method.

In one example, the mixing may be performed using a mixer or kneader. In an example embodiment of the present disclosure, the mixing may be performed at a temperature in a range of ≥ 20°C to ≤ 60°C for a duration in a range of ≥ 10 minutes to ≤ 90 minutes by using a PD mixer, a planetary mixer, a paddle mixer, a ribbon mixer, a dual shaft mixer, a high-speed impeller mixer, or a propeller mixer.

Each of, or at least one of, the positive electrode active material, the sulfide-based solid electrolyte, the binder, and the additive may be the same as those described above.

The positive electrode active material may be in powder form. The positive electrode active material may include, for example, but is not necessarily limited to, lithium transition metal oxides such as at least one of lithium cobalt oxide (LCO), lithium nickel oxide, lithium nickel cobalt oxide, lithium nickel-cobalt-aluminum oxide (NCA), lithium nickel-cobalt-manganese oxide (NCM), lithium manganate, and lithium iron phosphate, as well as at least one of nickel sulfide, copper sulfide, lithium sulfide, iron oxide, or vanadium oxide. The positive electrode active material CAM may be or include a single material, or a mixture of two or more materials.

The sulfide-based solid electrolyte may include, for example, $Li_{7-a-c}M1_aPS_{6-c}X1_c$ ($0 \leq a \leq 2$, $0 \leq c \leq 2$), wherein X1 includes at least one of F, Br, Cl, I, or a combination thereof, and M1 may include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), and a combination thereof. The sulfide-based solid electrolyte may include, for example, at least one of $Li_{7-x}PS_{6-x}Cl_x$ (where $0 \leq x \leq 2$), $Li_{7-x}PS_{6-x}Br_x$ (where $0 \leq x \leq 2$), $Li_{7-x}PS_{6-x}I_x$ (where $0 \leq x \leq 2$), $Li_{7-y}M1_yPS_{6-z}M2_z$ (where $0 \leq y \leq 2$, and $0 \leq z \leq 2$), and a combination thereof, wherein M1 is or includes at least one element from Groups 3 to 15 of the Periodic Table, and wherein M2 is or includes at least one element from Group 17 of the Periodic Table.

The additive may include a metal acetylacetonate, and a central metal of the metal acetylacetoneate may include, for example, at least one of aluminum (Al), boron (B), iron (Fe), copper (Cu), nickel (Ni), gallium (Ga), zinc (Zn), chromium (Cr), and a combination thereof.

The binder may include, for example, at least one of polyvinylidenefluoride, vinylidenefluoride/hexafluoropropylene copolymer, polytetrafluoroethylene, and a combination thereof.

The positive electrode active material slurry may further include a conductive material. The conductive material may include, for example, at least one of graphite, carbon black, acetylene black, carbon nanofibers, carbon nanotubes, and a combination thereof.

In the prepared positive electrode active material slurry, the additive ADT may interact with at least one of the sulfide-based solid electrolyte SSE and the binder BND to reduce or prevent aggregation of the sulfide-based solid electrolyte SSE with the binder BND. As a result, the additive ADT may improve the dispersibility of the positive electrode active material slurry and improve the phase stability. The additive ADT may limit the contact of the sulfide-based solid electrolyte SSE with moisture and a solvent in the air to reduce or prevent deterioration of the sulfide based solid electrolyte SSE.

On the other hand, the additive may have little influence on the chemical structure of the sulfide-based solid electrolyte. In other words, the additive may reduce or prevent deterioration of the sulfide-based solid electrolyte without deforming the sulfide-base solid electrolyte.

The positive electrode active material slurry may be coated on a positive electrode current collector and dried to form a positive electrode active material layer. The coating may be performed in a conventional manner. For example, the coating may be performed using a bar coater, a blade coater, or the like. The coating is not limited to the examples described as long as the slurry may be applied.

The drying process may be carried out in a dryer. For example, the dryer may include, but is not limited to, a convection oven, a vacuum oven, and the like.

## Negative Electrode Layer 200

Referring back to FIGS. 2A and 2B, the negative electrode layer 200 may include a negative electrode current collector 210 and a coating layer 220 on the negative electrode current collector 210. The negative electrode current collector 210 may provide a reference surface on which the coating layer 220 is disposed. The negative electrode current collector 210 may include a material that does not react with lithium, for example, a material that does not form an alloy or a compound with lithium. For example, the negative electrode current collector 210 may include at least one of copper (Cu), stainless steel, titanium (Ti), iron (Fe), cobalt (Co), nickel (Ni), and an alloy thereof. For example, a thickness of the negative electrode current collector 210 may range from $\geq 1$ $\mu$m to $\leq 20$ $\mu$m, from $\geq 5$ $\mu$m to $\leq 15$ $\mu$m, or from $\geq 7$ $\mu$m to $\leq 10$ $\mu$m.

The negative electrode current collector 210 may be formed of or include one of the metals mentioned above, an alloy of two or more of the metals mentioned above, or a coating material. The negative electrode current collector 210 may have, for example, a plate shape or a foil shape. In an example embodiment, the negative electrode current collector 210 may not be provided.

## Coating Layer 220

The coating layer 220 may induce growth of lithium metal between the coating layer 220 and the negative electrode current collector 210 when the unit cell CEL is charged. The coating layer 220 may constitute a protection layer for lithium metal and simultaneously or contemporaneously may reduce or suppress precipitation and growth of lithium dendrites.

The coating layer 220 may include metal and carbon. For example, the coating layer 220 may include at least one of gold (Au), platinum (Pt), palladium (Pd), silicon (Si), silver (Ag), aluminum (Al), bismuth (Bi), tin (Sn), and zinc (Zn). The coating layer 220 may include at least one carbon such as or including at least one of carbon black, acetylene black, furnace black, ketjen black, and graphene. In an example embodiment, the coating layer 220 may include a mixture (or composite) of carbon black and silver (Ag).

The coating layer 220 may further include an additive in addition to metal and carbon. The coating layer 220 may include at least one additive such as or including at least one of, for example, a binder, a filler, a coating agent, a dispersant, and an ionic conductivity agent.

The coating layer 220 may have a thickness that is less than the thickness of the positive electrode active material layer 120. For example, the coating layer 220 may have a thickness that is equal to or less than about 50%, 40%, 30%, 20%, 10%, or 5% of that of the positive electrode active material layer 120. The thickness of the coating layer 220 may range, for example, from $\geq 1\ \mu m$ to $\leq 20\ \mu m$, from $\geq 2\ \mu m$ to $\leq 10\ \mu m$, or from $\geq 3\ \mu m$ to $\leq 7\ \mu m$. When the coating layer 220 has an excessively small thickness, e.g., less than 1 $\mu m$, lithium dendrites formed between the coating layer 220 and the negative electrode current collector 210 may collapse the coating layer 220 to reduce cycle characteristics of the all-solid-state battery. When the coating layer 220 has an excessively large thickness, e.g., more than 20 $\mu m$, all-solid-state battery may have a reduced energy density, and an internal resistance of the all-solid-state battery may increase due to the coating layer 220, thereby reducing cycle characteristics of the cell. Although not shown, a carbon layer may further be included to increase adhesion between the coating layer 220 and the solid electrolyte layer 300.

## Solid Electrolyte Layer 300

The solid electrolyte layer 300 may be provided between the positive electrode layer 100 and the negative electrode layer 200. The solid electrolyte layer 300 may include a sulfide-based solid electrolyte with desired or improved lithium ionic conductivity. The solid electrolyte in the solid electrolyte layer 300 may be derived from a solid electrolyte composite. The solid electrolyte composite may be manufactured through a process of mixing the sulfide-based solid electrolyte SSE and a binder. The mixing may be carried out by a dry process without a solvent, or by a wet process in the presence of a solvent. When the mixing is carried out by the wet process, the solvent may be or include an organic solvent having a nonpolar or weak polarity. For example, the solvent may include at least one of xylene, benzene, toluene, pentane, hexane, cyclohexane, octyl acetate, isobutyl isobutyrate and a combination thereof. The solid electrolyte in the solid electrolyte layer 300 may include the same material as, or a different material from, the solid electrolyte in the positive electrode active material layer 120.

The solid electrolyte layer 300 may include a first solid electrolyte layer 310 and a second solid electrolyte layer 320. The first solid electrolyte layer 310 may be adjacent to the positive electrode layer 100, and the second solid electrolyte layer 320 may be adjacent to the negative electrode layer 200.

Referring to FIG. 2A, the first solid electrolyte layer 310 may include a first solid electrolyte. The first solid electrolyte may have a spherical or oval particle shape. The first solid electrolyte may include a sulfide-based solid electrolyte. The first solid electrolyte may be in an amorphous state, a crystalline state, or a state where amorphous and crystalline phases coexist. The solid electrolyte may include at least one of sulfur (S), phosphorus (P), and lithium (Li) among component elements included in the sulfide-based solid electrolyte mentioned above. For example, the solid electrolyte may be or include a material including $Li_2S\text{-}P_2S_5$. When $Li_2S\text{-}P_2S_5$ is utilized as the sulfide-based solid electrolyte material of the solid electrolyte, a mixing molar ratio of $Li_2S$ and $P_2S_5$ may be in a range of about 50:50 to about 90:10.

In an example embodiment, the first solid electrolyte may include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

Alternatively, the first solid electrolyte may include an argyrodite-type compound including $Li_{7-a}M_aPS_{6-c}X_c$. In the chemical formula above, X may be or include at least one of Cl, Br, or a combination thereof. M may be or include at least one of Na, K, Fe, Mg, Ca, Ag, Cu, Zr, Zn, or a combination thereof. The subscripts "a" and "c" may each be a real number in a range of 0 to 2.

The argyrodite-type solid electrolyte may have a density in a range of $\geq 1.5$ g/cc to $\leq 2.0$ g/cc. As the argyrodite-type solid electrolyte has a density equal to or greater than about 1.5 g/cc, it may be possible to decrease an internal resistance of an all-solid-state battery and to hinder or prevent a solid electrolyte layer from short-circuit and penetration caused by the formation of lithium dendrites. The first solid electrolyte may have a modulus, for example, in a range of $\geq 15$ GPa to $\leq 35$ GPa.

The first solid electrolyte layer 310 may further include a binder. The binder included in the first solid electrolyte layer 310 may include, for example, styrene-butadiene rubber (SBR), polytetrafluoroethylene, polyvinylidenefluoride, or polyethylene, but the present disclosure is not limited thereto. The binder of the first solid electrolyte layer 310 may be the same as, or different from, the binder of the positive electrode active material layer 120 or the binder of the coating layer 220.

The second solid electrolyte layer 320 may include a second solid electrolyte. The second solid electrolyte may have a spherical or oval particle shape.

The second solid electrolyte may include a sulfide-based solid electrolyte. A description of the second solid electrolyte may be the same as, or similar to, the description of the first solid electrolyte. In an example embodiment, the second solid electrolyte may have substantially the same composition as the first solid electrolyte. Alternatively, the second solid electrolyte may have a similar composition to the first solid electrolyte.

The second solid electrolyte may be in direct contact with the coating layer 220. Thus, the second solid electrolyte may hinder or suppress lithium dendrites formed between the coating layer 220 and the negative electrode current collector 210. The second solid electrolyte may effectively reduce or suppress negative electrode side reactions. Therefore, the all-solid-state battery according to examples of the present disclosure may improve in cell performance.

The first solid electrolyte layer 310 may have a first thickness TK1, and the second solid electrolyte layer 320 may have a second thickness TK2. The first thickness TK1 and the second thickness TK2 may be the same as, or different from, each other. In an example embodiment, the first thickness TK1 may be greater than the second thickness TK2. For example, the first thickness TK1 may be equal to about 1.1 to 5 times the second thickness TK2.

Referring back to FIGS. 1, 2A and 2B, the positive electrode layer 100 and the first solid electrolyte layer 310 may constitute a positive electrode mixture layer CSH. The negative electrode layer 200 and the second solid electrolyte layer 320 may constitute a negative electrode mixture layer ASH. The positive electrode mixture layer CSH may be stacked on the negative electrode mixture layer ASH.

The negative electrode mixture layer ASH and the positive electrode mixture layer CSH may have areas that are different from each other. For example, the area of the negative electrode mixture layer ASH may be greater than the area of the positive electrode mixture layer CSH. The positive electrode mixture layer CSH may be substantially overlapped by the negative electrode mixture layer ASH.

In an example embodiment of the present disclosure, the first solid electrolyte layer 310 may have substantially the same area as the positive electrode layer 100. The second solid electrolyte layer 320 may have substantially the same area as negative electrode layer 200.

For example, the positive electrode mixture layer CSH may have a first width WI1 in a first direction D1. The negative electrode mixture layer ASH may have a second width WI2 in the first direction D1. The first width WI1 may be less than the second width WI2. The positive electrode mixture layer CSH may have a third width WI3 in a second direction D2. The negative electrode mixture layer ASH may have a fourth width WI4 in the second direction D2. The third width WI3 may be less than the fourth width WI4.

The unit cell CEL according to the example embodiment may be fabricated by forming the negative electrode mixture layer ASH on a first carrier film, forming the positive electrode mixture layer CSH on a second carrier film, and then laminating the negative electrode mixture layer ASH and the positive electrode mixture layer CSH.

The unit cell CEL according to the example embodiment may further include a gasket GSK. The gasket GSK may be provided to surround the positive electrode mixture layer CSH. A difference in area between the negative electrode mixture layer ASH and the positive electrode mixture layer CSH may produce a step difference on a lateral surface of the unit cell CEL, and the gasket GSK may fill the step difference. The gasket GSK may surround four lateral surfaces of the positive electrode mixture layer CSH. For example, a thickness of the gasket GSK may be substantially the same, or less than, the thickness of the positive electrode mixture layer CSH. In an example embodiment, the positive electrode current collector 110 may reside at a height (or level) higher than the height or level of the gasket GSK.

The positive electrode current collector 110 may include a positive electrode tab CTB. The positive electrode tab CTB may be a protruding region of the positive electrode current collector 110. In an example embodiment, the positive electrode tab CTB may protrude in the second direction D2.

The negative electrode current collector 210 may include a negative electrode tab ATB. The negative electrode tab ATB may be a protruding region of the negative electrode current collector 210. In an example embodiment, the negative electrode tab ATB may protrude in a direction opposite to the second direction D2.

In the example embodiment that follows, a detailed description of technical features repetitive to those discussed above with reference to FIGS. 1, 2A, and 2B is omitted, and a difference thereof is discussed in detail.

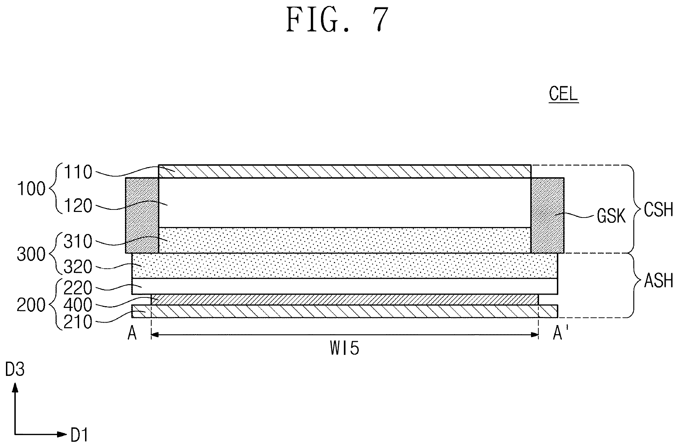

FIG. 7 illustrates a cross-sectional view taken along line A-A' in FIG. 1 for describing an all-solid-state battery according to another example embodiment of the present disclosure. Referring to FIG. 7, the negative electrode layer 200 of the unit cell CEL may further include a lithium metal layer 400 between the negative electrode current collector 210 and the coating layer 220. The lithium metal layer 400 may have an increased thickness when the unit cell CEL is charged. The coating layer 220 may constitute a protection layer for the lithium metal layer 400, and may simultaneously or contemporaneously reduce or suppress growth of lithium dendrites from the lithium metal layer 400.

The lithium metal layer 400 may be or include a metal thin layer including lithium or lithium alloy. As the lithium metal layer 400 is a metal layer including lithium, the lithium metal layer 400 may constitute, for example, a lithium reservoir. The lithium alloy may be or include, for example, at least one of Li-Al alloy, Li-Sn alloy, Li-In alloy, Li-Ag alloy, Li-Au alloy, Li-Zn alloy, Li-Ge alloy, or Li-Si alloy, but any suitable lithium alloys may be applicable. The lithium metal layer 400 may be formed of or include lithium, one of the alloys, or several types of the alloys. The lithium metal layer 400 may be, for example, a plated layer (or deposition layer). For example, the lithium metal layer 400 may be deposited (or precipitated) between the coating layer 220 and the negative electrode current collector 210 during charging of the unit cell CEL.

In another example embodiment of the present disclosure, the lithium metal layer 400 in the negative electrode 200 may be provided between the negative electrode current collector 210 and the coating layer 220, for example, before the unit cell CEL is assembled. When the lithium metal layer 400 is disposed between the negative electrode current collector 210 and the coating layer 220 before the unit cell CEL is assembled, the lithium metal layer 400 may be or include a metal layer including lithium and thus constitute a lithium reservoir. For example, before the unit cell CEL is assembled, a lithium foil may be placed between the negative electrode current collector 210 and the coating layer 220.

When the lithium metal layer 400 is deposited by charging after assembling the unit cell CEL, the energy density of the unit cell CEL may be increased because the unit cell CEL does not include the lithium metal layer at the time of assembling. When the unit cell CEL is charged, the charging capacity of the coating layer 220 may be exceeded. That is, the coating layer 220 may be overcharged. In the early stage of charging, lithium may be occluded in the coating layer 220. When charging is performed in excess of the capacity of the coating layer 220, for example, lithium may be deposited between the negative electrode coating layer 220 and the negative electrode current collector 210. As a result, the metal layer 400 may be formed by the deposited lithium.

The lithium metal layer 400 may be mainly composed of or include lithium (i.e., metal lithium). During discharge, lithium in the lithium metal layer 400 may be ionized and migrate to the positive electrode 100. In other words, lithium may be used as the negative electrode active material in the unit cell CEL. In addition, because the coating layer 220 covers the lithium metal layer 400, the coating layer 220 may protect the lithium metal layer 400 and reduce or suppress precipitation growth of lithium dendrite. Accordingly, the coating layer 220 may reduce or suppress a short circuit and a decrease in capacity of the unit cell CEL and improve the cycle characteristics of the unit cell.

When the lithium metal layer 400 is formed by charging after assembly of the unit cell CEL, the negative electrode 200 (including the negative electrode current collector 210, the coating layer 220, and a region between them) may be or include a Li-free region that does not include lithium (Li) in an initial state or a state after complete discharge of the unit cell CEL.

The lithium metal layer 400 may have a fifth width WI5 in the first direction D1. The fifth width WI5 may be the same as or greater than the first width WI1. The fifth width WI5 may be the same as or less than the second width WI2. For example, the fifth width WI5 may be greater than the first width WI1 and less than the second width WI2.

The negative electrode 200 may further include a thin layer provided between the negative electrode current collector 210 and the coating layer 220. The thin layer may be provided on one side of the negative electrode current collector 210 to form an alloy with lithium.

The thin layer may include, for example, an element capable of forming an alloy with lithium. The element capable of forming an alloy with lithium may include, for example, at least one of gold, silver, zinc, tin, indium, silicon, aluminum, or bismuth, but the present disclosure is not limited thereto and any suitable element capable of forming an alloy with lithium in the art may be utilized. The thin layer may be formed of or include one of the metals discussed above or an alloy of various types of metals.

As the thin layer is disposed on one side of the negative electrode current collector 210, a plated shape of the lithium metal layer 400 deposited between the thin layer and the coating layer 220 may be more planarized, and the all-solid-state battery may improve in cycle characteristics.

A thickness of the thin layer may range from, for example, $\geq 1$ nm to $\leq 800$ nm, $\geq 10$ nm to $\leq 700$ nm, $\geq 50$ nm to $\leq 600$ nm, or $\geq 100$ nm to $\leq 500$ nm. When the thickness of the thin layer is less than about 1 nm, it may be difficult to achieve performance caused by the thin layer. When the thickness of the thin layer is excessively large, the thin layer may absorb lithium to reduce a deposition amount of lithium in the negative electrode 200, thereby reducing an energy density and cycle characteristics of the all-solid-state battery. For example, vapor deposition, sputtering, or plating may be employed to form the thin layer on the negative electrode current collector 210, but the present disclosure is not limited thereto, and any suitable methods capable of forming a thin layer in the art may be utilized.

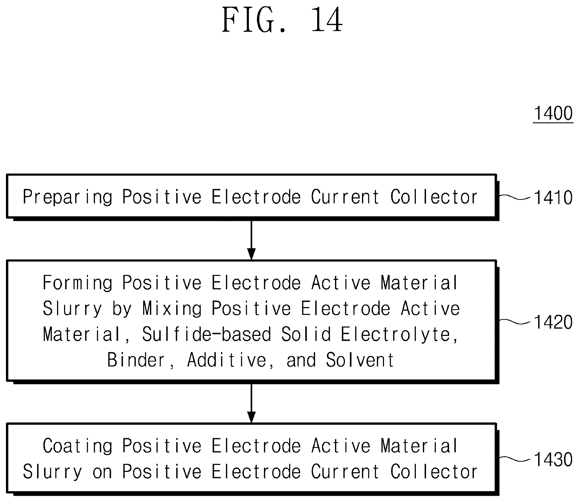

FIG. 14 is a flowchart illustrating a method of manufacturing a positive electrode for an all-solid-state battery, according to an example embodiment. In FIG. 14, the method 1400 includes operation 1410, which includes preparing a positive electrode current collector. Operation 1420 includes forming a positive electrode active material slurry by mixing a positive electrode active material, a sulfide-based solid electrolyte, a binder, an additive, and a solvent. For example, the additive includes metal acetylacetonate. In another example, a central metal of the metal-acetylacetonate includes at least one of aluminum (Al), manganese (Mn), boron (B), iron (Fe), copper (Cu), nickel (Ni), gallium (Ga), zirconium (Zr), tin (Sn), zinc (Zn), chromium (Cr), and a combination thereof.

In a further example, a weight ratio of the binder to the additive is in a range of about 1:0.01 to about 1:0.5. In yet another example, the sulfide-based solid electrolyte includes at least one of $Li_{7-x}PS_{6-x}Cl_x$ (where $0 \leq x \leq 2$), $Li_{7-x}PS_{6-x}Br_x$ (where $0 \leq x \leq 2$), $Li_{7-x}PS_{6-x}I_x$ (where $0 \leq x \leq 2$), $Li_{7-y}M1_yPS_{6-z}M2_z$ (where $0 \leq y \leq 2$, and $0 \leq z \leq 2$), and a combination thereof, wherein M1 includes at least one element from Groups 3 to 15 of the Periodic Table, and M2 includes at least one element from Group 17 of the Periodic Table. In yet another example, the binder includes at least one of polyvinylidenefluoride, vinylidenefluoride/hexafluoropropylene copolymer, polytetrafluoroethylene, and a combination thereof. Operation 1430 includes coating the positive electrode active material slurry on the positive electrode current collector.

Hereinafter, the present disclosure is discussed below in detail through embodiments. These example embodiments, however, are provided to illustrate the present disclosure, and the scope of the present disclosure is not limited to these embodiments.

### Embodiment 1

**Preparation of Positive Electrode Active Material Slurry:**

As a positive electrode active material, $LiNi_{0.8}Co_{0.1}Al_{0.1}O_2$ (NCA) powder was prepared, and as a sulfide-based solid electrolyte, argyrodite -based solid electrolyte ($Li_6PS_5Cl$) powder was prepared. A vinylidene fluoride/hexafluoropropylene copolymer (PVdF/HFP) was prepared as a binder, and carbon nanofibers (CNF) were prepared as a conductive material. Aluminum acetylacetonate (Al $(acac)_3$) was prepared as an additive.

A positive electrode active material slurry was prepared by mixing these materials in an octyl acetate solvent at a weight ratio of positive electrode active material:solid electrolyte: additive: conductive material:binder=84.97:13:0.03:1:1.

**Manufacture of Positive Electrode:**

The positive electrode active material slurry was coated onto an aluminum positive electrode current collector and dried at 130°C for 10 minutes to fabricate a positive electrode.

**Manufacture of Solid Electrolyte Layer:**

An argyrodite-type solid electrolyte $Li_6PS_5Cl$ was added to an isobutyryl isobutylate binder solution containing a butyl acrylate-based polymer to prepare a solid electrolyte slurry (the mixing ratio of the solid electrolyte and the binder was 98.7:1.3 by weight). The prepared solid electrolyte slurry was coated onto a release polytetrafluoroethylene film and dried at 60°C for 2 hours to fabricate a solid electrolyte layer.

**Fabrication of All-Solid-State Battery:**

A symmetrical coin cell was fabricated in which the positive electrode prepared above was equally applied as a working electrode and a counter electrode.

### Embodiment 2

An all-solid-state battery was fabricated in the same method as in Embodiment 1, with a difference for mixing the positive electrode active material, the solid electrolyte, the additive, the conductive material, and the binder in a weight ratio of 84.9:13:0.1:1:1 during the preparation of the positive electrode active material slurry.

### Embodiment 3

An all-solid-state battery was fabricated in the same method as in Embodiment 1, with a difference for mixing the positive electrode active material, the solid electrolyte, the additive, the conductive material, and the binder in a weight ratio of 84.8:13:0.2:1:1 during the preparation of the positive electrode active material slurry.

### Comparative Example

An all-solid-state battery was prepared in the same manner as in Example 1, with a difference for omitting the additive during the preparation of the positive electrode active material slurry and mixing the positive electrode active material, solid electrolyte, conductive agent, and binder in a weight ratio of 85:13:1:1.

### Evaluation Example 1: Evaluation of Phase Stability of Positive Electrode Active Material Slurry

The shear viscosity of the positive electrode active material slurries prepared according to Embodiments and Comparative Example was measured using an Anton Paar Rheometer. After 10 ml of the positive electrode active material slurry was put into the equipment, the shear viscosity was measured.

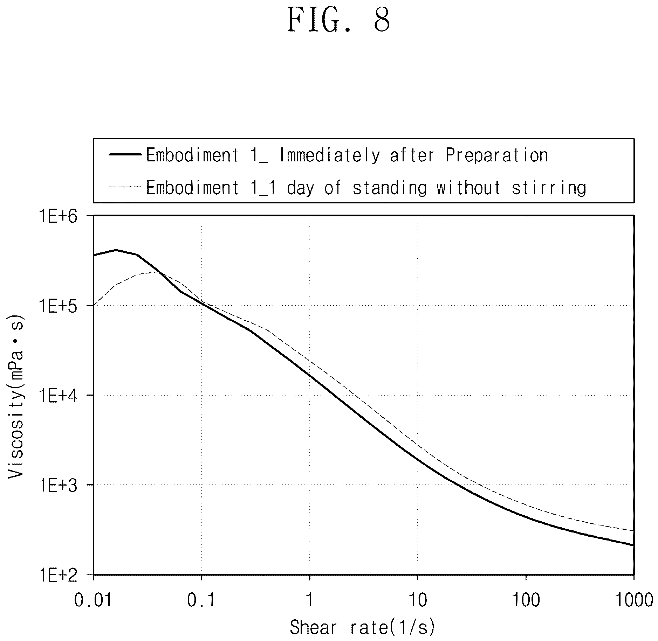

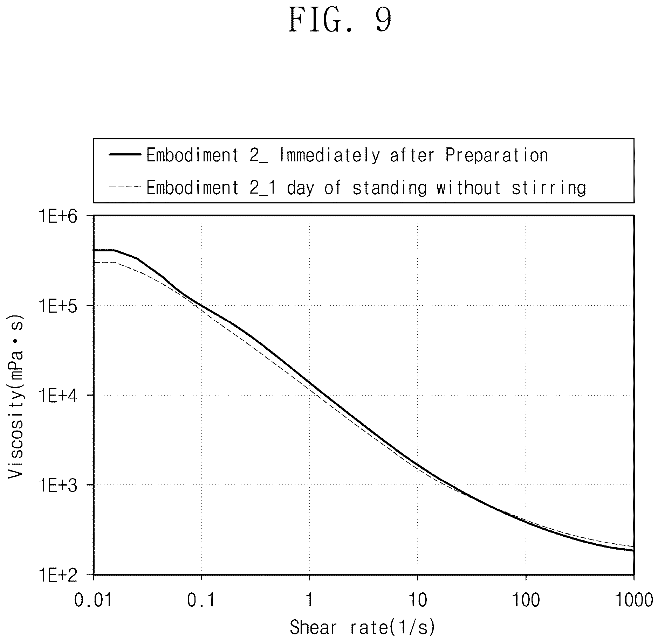

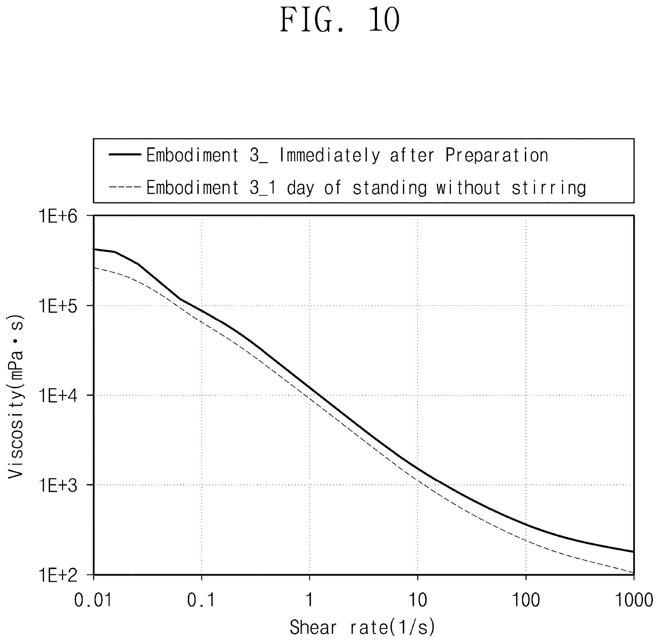

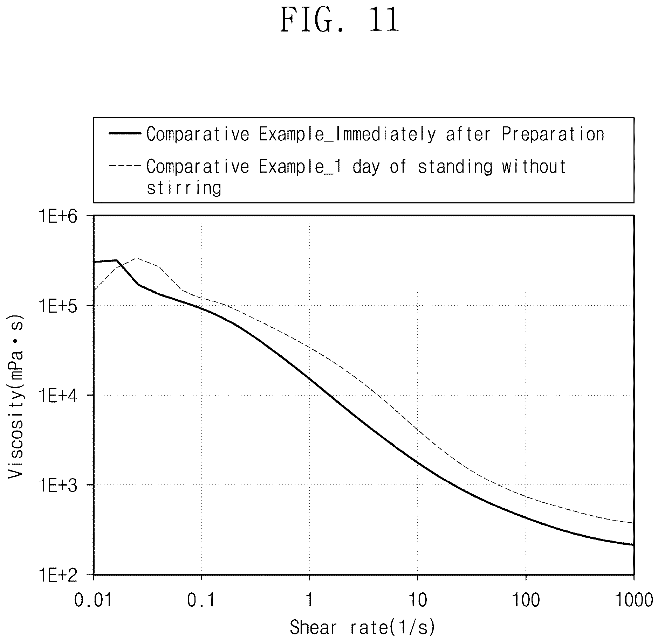

The phase stability was evaluated by measuring the shear viscosity (viscosity at a shear rate of 10 (1/s)) at room temperature (20°C) immediately after the preparation of the positive electrode active material slurries of Embodiments and Comparative Example and after 1 day of standing without stirring. The results are shown in FIGS. 8 to 11 and Table 1 below. The viscosity increase rate was calculated according to the following equation 1.

Equation 1:

$$\text{Viscosity Increase Rate (\%)} = [(A-B)/B] \times 100$$

A: shear viscosity after 1 day of standing without stirring
B: shear viscosity immediately after preparation

Table 1:

| Distinction | Additive Amount (wt%) | Slurry viscosity (mPa·s) | | Viscosity Increasing Rate (%) |
| --- | --- | --- | --- | --- |
| | | Immediately after Preparation | 1 day of standing without stirring | |
| Embodiment 1 | 0.03 | 1,921 | 2,733 | 44 |
| Embodiment 2 | 0.1 | 1,753 | 1,604 | -9 |
| Embodiment 3 | 0.2 | 1,613 | 1,220 | -24 |
| Comparative Example | 0 | 1,822 | 4,191 | 130 |

Referring to FIGS. 8 to 11 and Table 1, it can be confirmed that the positive electrode active material slurry according to the embodiments has a substantially small change rate of viscosity after 1 day of standing without stirring compared with the positive electrode active material slurry according to the comparative example.

## Evaluation Example 2: Evaluation of Positive Electrode Ion Conductivity and Electron Conductivity

The symmetrical coin cell according to each of Embodiments and Comparative Example was used to evaluate the ionic conductivity and the electrical conductivity of the positive electrode by the following methods.

Electrochemical Impedance Spectroscopy (EIS) was performed on the symmetric coin cell. At this time, EIS was performed at an amplitude of about 10 mV, a frequency of 10 mHz to 1 MHz, under an air atmosphere at 45°C. The positive electrode is a mixed conductor capable of simultaneously transporting electrons and ions, and an equivalent circuit corresponding thereto can be designed. A Nyquist plot was obtained by impedance analysis, from which the ionic conductivity and the electronic conductivity of the positive electrode were separated and extracted. The results are shown in Table 2 below.

Table 2:

| Distinction | Additive Amount (wt%) | Ion Conductivity (mS/cm) | Electronic Conductivity (mS/cm) |
| --- | --- | --- | --- |
| Embodiment 1 | 0.03 | $5.35 \times 10^{-5}$ | $9.47 \times 10^{-4}$ |
| Embodiment 2 | 0.1 | $5.62 \times 10^{-5}$ | $1.26 \times 10^{-3}$ |
| Embodiment 3 | 0.2 | $4.85 \times 10^{-5}$ | $9.51 \times 10^{-4}$ |
| Comparative Example | 0 | $3.87 \times 10^{-5}$ | $4.26 \times 10^{-4}$ |

Referring to Table 2, it may be observed that the positive electrode according to the embodiments have superior ion conductivity and electron conductivity when compared with the positive electrode according the comparative example.

## Evaluation Example 3: Solid Electrolyte Evaluation

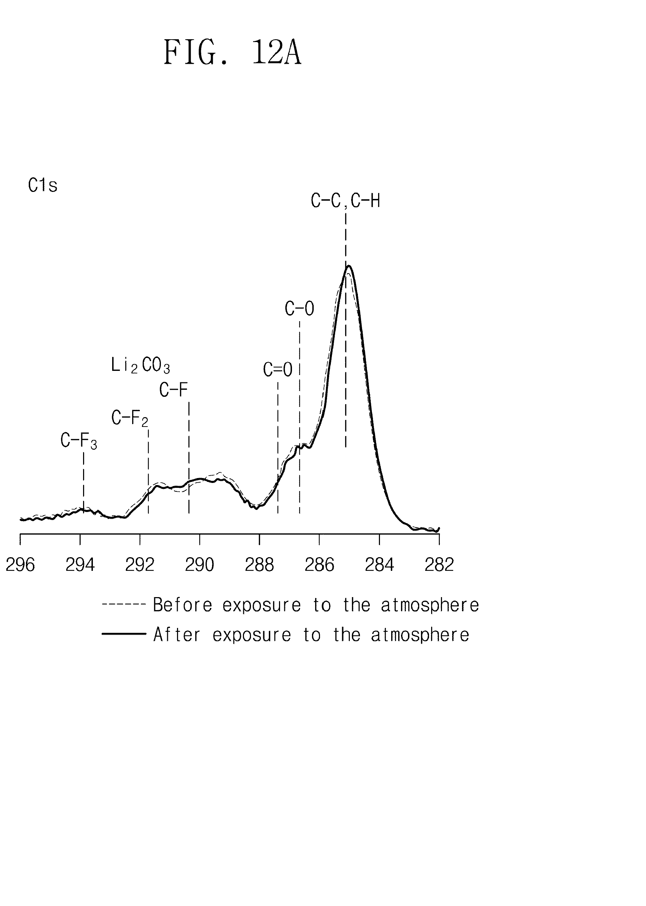

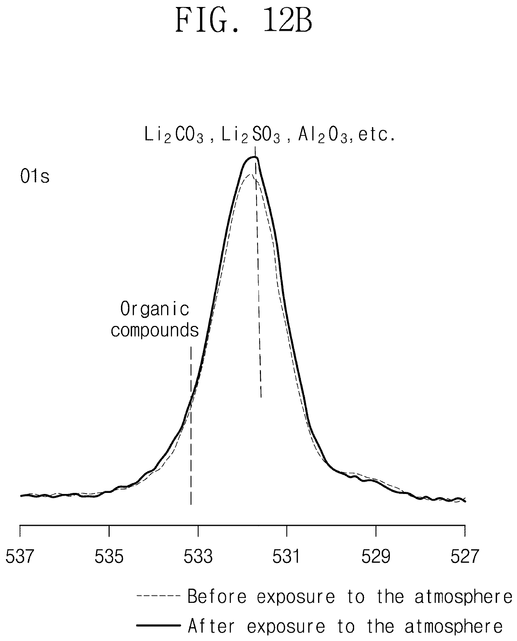

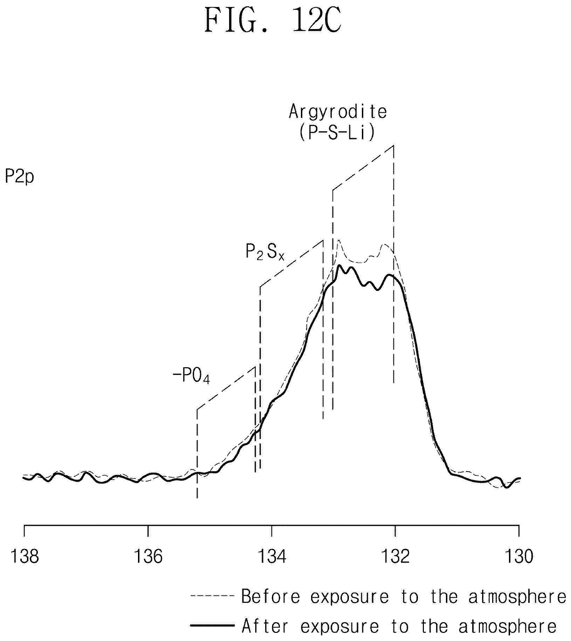

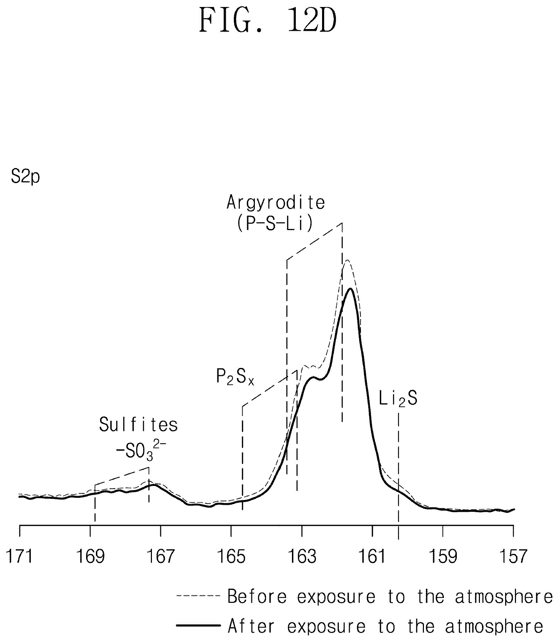

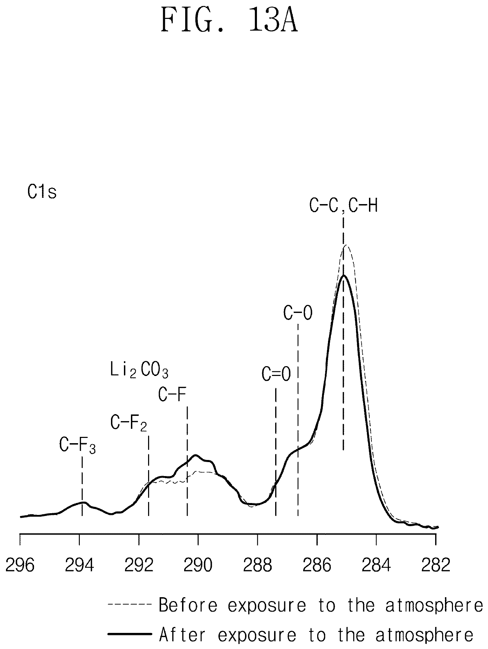

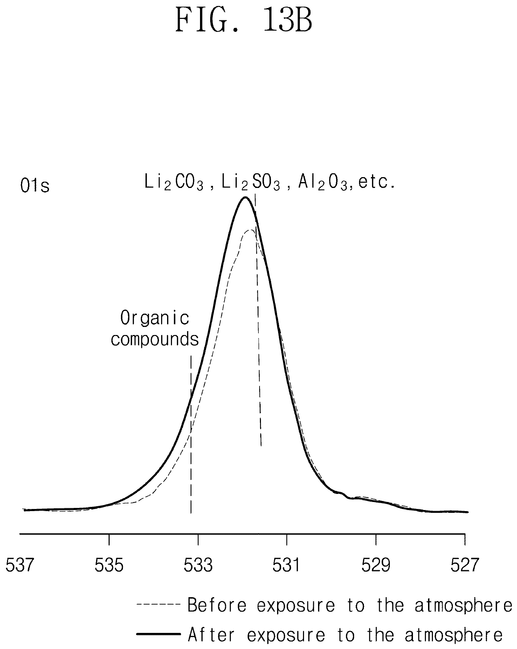

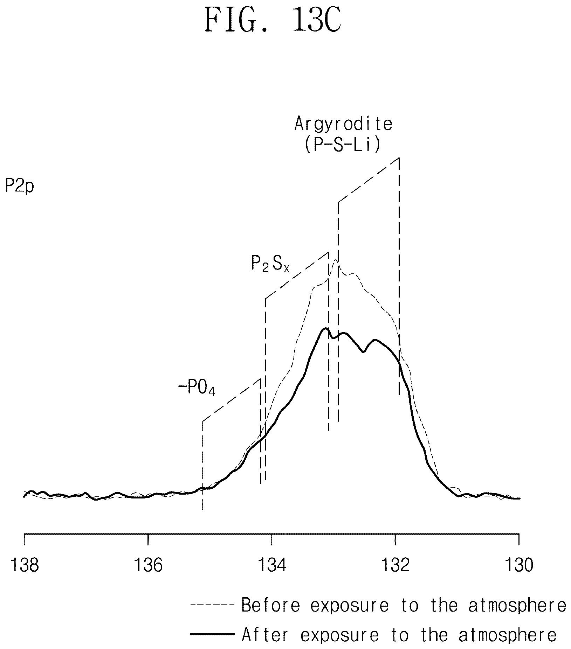

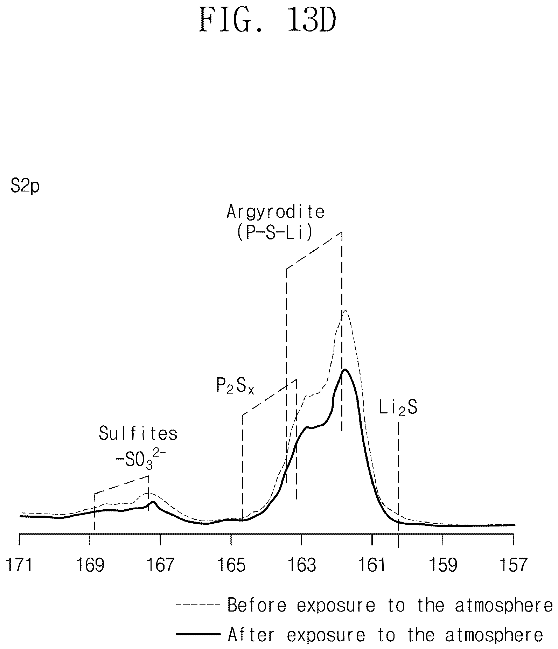

XPS (X-ray Photoelectron Spectroscopy) analysis was performed on the positive electrodes prepared according to Embodiment 1 and Comparative Example. Thereafter, the positive electrodes of Embodiment 1 and Comparative Example were exposed to the atmosphere for one or more days and then subjected to XPS analysis again. The XPS analysis results before and after atmospheric exposure are shown in FIGS. 12A to 12D and FIGS. 13A to 13D.

Referring to FIG. 13A to FIG. 13D, which are XPS analysis graphs of the positive electrode of the comparative example, it may be observed that the chemical structure of the solid electrolyte changed before and after exposure to the atmosphere. Referring to FIGS. 12A-12D, which are XPS analysis graphs for the positive electrode of Embodiment 1, it may be observed that the chemical structure of the solid electrolyte remains almost intact before and after atmospheric exposure.

The positive electrode for an all-solid-state battery according to the present disclosure may have desired or improved electrical characteristics and desired or improved atmospheric stability.

While this disclosure has been described in connection with what is presently considered to be example embodiments, it is to be understood that the present disclosure is not limited to the disclosed embodiments and is intended to cover various modifications and equivalent arrangements included within the spirit and scope of the appended claims, and therefore the aforementioned embodiments should be understood to be examples not limiting this disclosure in any way.

## Claims

1. A positive electrode (100) for an all-solid-state battery (CEL), the positive electrode (100) comprising a positive electrode current collector (110), and a positive electrode active material layer (120) on the positive electrode current collector (110),

   wherein the positive electrode active material layer (120) comprises a positive electrode active material (CAM), a sulfide-based solid electrolyte (SSE), a binder (BND), and an additive (ADT), and
   wherein the additive (ADT) comprises a metal acetylacetonate.

2. The positive electrode (100) of claim 1, wherein a central metal of the metal-acetylacetonate comprises at least one of aluminum (Al), manganese (Mn), boron (B), iron (Fe), copper (Cu), nickel (Ni), gallium (Ga), zirconium (Zr), tin (Sn), zinc (Zn), chromium (Cr), and a combination thereof.

3. The positive electrode (100) of claim 1 or 2, wherein attraction forces exist between the additive (ADT) and the sulfide-based solid electrolyte (SSE), or between the additive (ADT) and the binder (BND).

4. The positive electrode (100) according to any one of claims 1 to 3,
   wherein an amount of the additive (ADT) is in a range of $\geq 0.01$ parts by weight to $\leq 0.8$ parts by weight relative to 100 parts by weight of the positive electrode active material layer (120).

5. The positive electrode (100) according to any one of claims 1 to 4, wherein a weight ratio of the binder (BND) to the additive (ADT) is in a range of about 1:0.01 to about 1:0.5.

6. The positive electrode (100) according to any one of claims 1 to 5, wherein an amount of the sulfide-based solid electrolyte (SSE) is in a range of $\geq 5$ parts by weight to $\leq 25$ parts by weight relative to 100 parts by weight of the positive electrode active material layer (120).

7. The positive electrode (100) according to any one of claims 1 to 6,

   wherein the sulfide-based solid electrolyte (SSE) comprises at least one of $Li_{7-x}PS_{6-x}Cl_x$ (where $0 \leq x \leq 2$), $Li_{7-x}PS_{6-x}Br_x$ (where $0 \leq x \leq 2$), $Li_{7-x}PS_{6-x}I_x$ (where $0 \leq x \leq 2$), $Li_{7-y}M1_yPS_{6-z}M2_z$ (where $0 \leq y \leq 2$, and $0 \leq z \leq 2$), and a combination thereof,
   wherein M1 comprises at least one element from Groups 3 to 15 of the Periodic Table, and
   wherein M2 comprises at least one element from Group 17 of the Periodic Table.

8. The positive electrode (100) according to any one of claims 1 to 7,
   wherein the binder (BND) comprises at least one of a fluorine-based binder, a rubber-based binder, and a combination thereof.

9. The positive electrode (100) according to any one of claims 1 to 8, wherein the binder (BND) comprises at least one of polyvinylidenefluoride, vinylidenefluoride/hexafluoropropylene copolymer, polytetrafluoroethylene, and a combination thereof.

10. The positive electrode (100) according to any one of claims 1 to 9,

wherein the positive electrode active material layer (120) further comprises a conductive material, and
wherein the conductive material comprises at least one of natural graphite, artificial graphite, carbon black, acetylene black, ketjen black, carbon fiber, carbon nanofiber, carbon nanotube, and a combination thereof.

11. An all-solid-state battery (CEL) comprising:

a positive electrode (100) as set forth in any one of claims 1 to 10;
a negative electrode (200); and
a solid electrolyte layer (300) between the positive electrode (100) and the negative electrode (200).

12. The all-solid-state battery (CEL) of claim 11, wherein the solid electrolyte layer (300) comprises a sulfide-based solid electrolyte (SSE).

13. The all-solid-state battery (CEL) of claim 11 or 12,

wherein the negative electrode (200) comprises a negative electrode current collector (210), and a coating layer (220) on the negative electrode current collector (210), and
wherein the coating layer (220) comprises a carbon-based material and a metal.

14. A method of manufacturing a positive electrode (100) for an all-solid-state battery (CEL), the method comprising:

preparing a positive electrode current collector (110);
forming a positive electrode active material slurry by mixing a positive electrode active material (CAM), a sulfide-based solid electrolyte (SSE), a binder (BND), an additive (ADT), and a solvent; and
coating the positive electrode active material slurry on the positive electrode current collector (110),
wherein the additive (ADT) comprises metal acetylacetonate.

15. The method of claim 14, wherein a central metal of the metal-acetylacetonate comprises at least one of aluminum (Al), manganese (Mn), boron (B), iron (Fe), copper (Cu), nickel (Ni), gallium (Ga), zirconium (Zr), tin (Sn), zinc (Zn), chromium (Cr), and a combination thereof.

# FIG. 1

CEL

CTB

B →

A

A'

110

CSH

GSK

ASH

WI4 WI3

B' →

ATB

WI1

WI2

D2

D3 ⊙ → D1

# FIG. 2A

# FIG. 2B

EP 4 769 522 A1

# FIG. 3

M

ADT

BND

SSE

CAM

# FIG. 4

M

BND

SSE

CAM

# FIG. 5

SSE

BND

# FIG. 6

SSE

ADT

BND

# FIG. 7

CEL

# FIG. 8

# FIG. 9

# FIG. 10

FIG. 11

# FIG. 12A

C1s

C-C,C-H

C-O

Li₂CO₃

C-F

C=O

C-F₂

C-F₃

296    294    292    290    288    286    284    282

----- Before exposure to the atmosphere
—— After exposure to the atmosphere

# FIG. 12B

$Li_2CO_3$, $Li_2SO_3$, $Al_2O_3$, etc.

O1s

Organic
compounds

537     535     533     531     529     527

----- Before exposure to the atmosphere
——— After exposure to the atmosphere

# FIG. 12C

# FIG. 12D

# FIG. 13A

C1s

C-C,C-H

C-O

Li₂CO₃

C-F

C-F₂

C=O

C-F₃

296  294  292  290  288  286  284  282

----- Before exposure to the atmosphere
—— After exposure to the atmosphere

# FIG. 13B

O1s    $Li_2CO_3$, $Li_2SO_3$, $Al_2O_3$, etc.

Organic
compounds

537    535    533    531    529    527

------ Before exposure to the atmosphere
—— After exposure to the atmosphere

# FIG. 13C

P2p

Argyrodite
(P-S-Li)

$P_2S_x$

$-PO_4$

138    136    134    132    130

------ Before exposure to the atmosphere

——— After exposure to the atmosphere

# FIG. 13D

# FIG. 14

1400

```
┌─────────────────────────────────────────────┐
│ Preparing Positive Electrode Current Collector │ ～1410
└─────────────────────────────────────────────┘
                        │
                        ▼
┌─────────────────────────────────────────────┐
│      Forming Positive Electrode Active Material │
│      Slurry by Mixing Positive Electrode Active │ ～1420
│      Material, Sulfide-based Solid Electrolyte, │
│         Binder, Additive, and Solvent          │
└─────────────────────────────────────────────┘
                        │
                        ▼
┌─────────────────────────────────────────────┐
│      Coating Positive Electrode Active Material │
│    Slurry on Positive Electrode Current Collector │ ～1430
└─────────────────────────────────────────────┘
```

Europäisches
Patentamt

European
Patent Office

Office européen
des brevets

# EUROPEAN SEARCH REPORT

**Application Number**

EP 25 22 7350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 401 163 A1 (.) 17 July 2024 (2024-07-17) * the whole document * * * example 1 * ----- | 1-15 | INV. H01M4/131 H01M4/1315 H01M4/505 H01M4/525 H01M4/62 H01M10/0562 |
| Y | JP 6 860466 B2 (TOSHIBA CORP) 14 April 2021 (2021-04-14) * paragraphs [0020], [0036] - [0037], [0141] - [0144], [0153] * * claims 1,7 * ----- | 1-15 | |
| Y | KR 102 064 312 B1 (LG CHEMICAL LTD [KR]) 9 January 2020 (2020-01-09) * paragraphs [0077] - [0080]; claims 1-3 * ----- | 1-3,14, 15 | |
| Y | JP H09 199112 A (SONY CORP) 31 July 1997 (1997-07-31) * abstract *; claims 1-3 * ----- | 1,2,14, 15 | |

**TECHNICAL FIELDS SEARCHED (IPC)**

H01M

The present search report has been drawn up for all claims

| Place of search | Date of completion of the search | Examiner |
|---|---|---|
| The Hague | 20 April 2026 | Standaert, Frans |

EPO FORM 1503 03.82 (P04C01)

## ANNEX TO THE EUROPEAN SEARCH REPORT
## ON EUROPEAN PATENT APPLICATION NO.

EP 25 22 7350

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2026

| Patent document cited in search report | | Publication date | Patent family member(s) | | Publication date |
|---|---|---|---|---|---|
| EP 4401163 | A1 | 17-07-2024 | CN | 118318319 A | 09-07-2024 |
| | | | EP | 4401163 A1 | 17-07-2024 |
| | | | JP | 7715945 B2 | 30-07-2025 |
| | | | JP | 2024546588 A | 26-12-2024 |
| | | | KR | 20240065669 A | 14-05-2024 |
| | | | WO | 2024101612 A1 | 16-05-2024 |
| JP 6860466 | B2 | 14-04-2021 | JP | 6860466 B2 | 14-04-2021 |
| | | | JP | 2019079692 A | 23-05-2019 |
| KR 102064312 | B1 | 09-01-2020 | NONE | | |
| JP H09199112 | A | 31-07-1997 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240199698